# EUROPÄISCHE PATENTANMELDUNG

(11) **EP 1 129 908 A2**
(43) Veröffentlichungstag der Anmeldung: **05.09.2001**
(21) Anmeldenummer: 01104736.2
(22) Anmeldetag: 26.02.2001
(51) Int. Cl.: B60R 16/02

(54) **Leitungsschutzvorrichtung**

(30) Priorität: 29.02.2000 DE 10009491
(71) Anmelder: Makohonenko, Mascha, 82065 Baierbrunn/Buchenhain (DE); Kramer, Karl, 82065 Baierbrunn/Buchenhain (DE)
(72) Erfinder: Makohonenko, Mascha, 82065 Baierbrunn/Buchenhain (DE); Kramer, Karl, 82065 Baierbrunn/Buchenhain (DE)
(74) Vertreter: Manitz, Finsterwald & Partner

(57) **Zusammenfassung**

Die Erfindung betrifft eine Leitungsschutzvorrichtung zum Schutz von Leitungen vor Tierverbiß, insbesondere zum Schutz von Leitungen eines Kraftfahrzeugs vor Marderbiß, zumindest mit zwei Abstandshalterungen (11, 35, 47, 69, 79, 107) und einem flächigen Schutzmantel (23, 43, 65, 85, 91, 109, 119), wobei die Abstandshalterungen (11, 35, 47, 69, 79, 107) an einer zu schützenden Leitung (31, 45, 67, 105) befestigbar sind, und wobei der Schutzmantel (23, 43, 65, 85, 91, 109, 119) dergestalt gewölbt an die Abstandshalterungen anlegbar ist, daß die Leitung (31, 45, 67, 105) von dem Schutzmantel umfänglich umgeben ist und zumindest entlang eines Abschnitts der Leitung zwischen der Leitung und dem Schutzmantel ein Hohlraum gebildet ist.

## Beschreibung

Die Erfindung betrifft eine Leitungsschutzvorrichtung zum Schutz von Leitungen vor Tierverbiß, insbesondere zum Schutz von Leitungen eines Kraftfahrzeugs vor Marderbiß.

Elektrische Leitungen und Fluidleitungen, beispielsweise Kühlmittelschläuche, werden insbesondere bei Nachts im Freien abgestellten Autos von Mardern durch Verbiß beschädigt. Um dies zu vermeiden, ist es bekannt, den Motorraum schlupfdicht abzuzäunen, elektrisch aufladbare Drähte zu verlegen oder die Leitungen mit Schutzhülsen zu versehen. Diese Maßnahmen sind aufwendig oder können einen Marderverbiß nicht immer wirksam vermeiden.

Es ist eine Aufgabe der Erfindung, eine Leitungsschutzvorrichtung zu schaffen, die bei einfacher Montage und hoher Flexibilität hinsichtlich des Durchmessers und der Form der zu schützenden Leitungen einen wirksamen Schutz gegen Beschädigungen durch Tierverbiß bietet.

Diese Aufgabe wird gelöst durch eine Leitungsschutzvorrichtung zumindest mit zwei Abstandshalterungen und einem flächigen Schutzmantel, wobei die Abstandshalterungen an einer zu schützenden Leitung befestigbar sind, und wobei der Schutzmantel dergestalt gewölbt an die Abstandshalterungen anlegbar ist, daß die Leitung von dem Schutzmantel umfänglich umgeben ist und zumindest entlang eines Abschnitts der Leitung zwischen der Leitung und dem Schutzmantel ein Hohlraum gebildet ist.

Erfindungsgemäß sind also Abstandshalterungen vorgesehen, die derartig auf die Leitung aufgesetzt werden, daß sie die Leitung offen oder geschlossen umgreifen. Der Schutzmantel, bei dem es sich um eine offene Fläche und nicht eine geschlossene Hülse oder einen Schlauch handelt, wird um die derartig vormontierten Abstandshalterungen gewickelt. Indem der Schutzmantel die Leitung mit geschlossenem Umfang umhüllt, ist die Leitung von außen nicht mehr zugänglich und somit gegen ein An- oder Durchbeißen durch einen Marder geschützt. Im Unterschied zu einem unmittelbaren Umwickeln der Leitung sorgt der durch das Umwickeln der Abstandshalterungen erzeugte Hohlraum zwischen der Leitung und dem Schutzmantel dafür, daß selbst bei einem Anbeißen des Schutzmantels die Leitung nicht beschädigt werden kann.

Die Vorrichtung kann mit geringem Aufwand an der Leitung montiert werden, da die Abstandshalterungen beispielsweise seitlich auf die zu schützende Leitung aufgeclipst werden können. Dagegen ist nicht, wie bei einer umfänglich geschlossenen Schutzhülse oder einem Schutzschlauch, ein zwischenzeitliches Lösen eines Endes der Leitung erforderlich.

Die Vorrichtung kann auch ohne weiteres an verschiedene Leitungsdurchmesser oder an beliebige Kurvenformen der Leitung angepaßt werden. Eine Abstandshalterung kann für unterschiedliche Leitungsdurchmesser verwendet werden. Zur Verwendung der Vorrichtung bei stark unterschiedlichen Leitungsdurchmessern kann ein Satz verschiedener Abstandshalterungen vorgesehen sein, die in einer entsprechenden Abstufung jeweils einen unterschiedlichen Innendurchmesser besitzen. Unterschiedliche Durchmesser sogar entlang einer einzigen Leitung können somit ohne weiteres bewältigt werden, wobei stets ein konstanter Außenumfang der Abstandshalterungen und somit ein konstanter Umfang des angelegten Schutzmantels vorgesehen sein kann.

Die erfindungsgemäße Vorrichtung eignet sich auch als und zum Schutz von Manschetten von Lenkstangen und Antriebswellen von Kraftfahrzeugen.

In einer bevorzugten Ausführungsform weist die Vorrichtung wenigstens zwei Befestigungseinrichtungen auf, durch welche die Lage des an den Abstandshalterungen angelegten Schutzmantels bezüglich der Leitung fixiert werden kann.

Außerdem ist es bevorzugt, wenn die Abstandshalterungen an der Leitung auf lösbare Weise befestigbar sind, insbesondere in dem sie ein Klammerorgan zum umgreifenden Aufsetzen auf die zu schützende Leitung besitzen. Der vorzugsweise runde Innendurchmesser eines Klammerorgans kann geringer dimensioniert sein als der Außendurchmesser der zu schützenden Leitung, so daß die auf die Leitung aufgesetzte Abstandshalterung aufgrund einer Klammerspannung an der Leitung gehalten wird. Dies erleichtert die nachfolgende Montage des Schutzmantels.

Das Klammerorgan kann durch einen Klammerring, der sich senkrecht zu der Längsrichtung der Leitung erstreckt, oder durch eine Klammerhülse gebildet sein, die sich zusätzlich entlang eines Längsabschnitts der Leitung erstreckt. Das Klammerorgan kann einen radialen Aufsetzschlitz besitzen, um das seitliche Aufsetzen auf die Leitung zu ermöglichen.

Weiterhin ist es bevorzugt, wenn die Abstandshalterungen jeweils zumindest ein Beabstandungsorgan aufweisen, an das der Schutzmantel zur Erzeugung des Hohlraums angelegt werden kann. Das Beabstandungsorgan erstreckt sich vorzugsweise in radialer Richtung bezüglich der Leitung, d.h. insbesondere in radialer Richtung bezüglich eines Klammerorgans der Abstandshalterung.

Als Beabstandungsorgane können mehrere, beispielsweise drei Speichen, die mit dem Klammerorgan verbunden sind, oder eine oder mehrere Ringscheiben mit einer zentralen Aufnahmeöffnung sowie einem radialen Aufsetzschlitz vorgesehen sein.

Um eine höhere Stabilität der Abstandshalterung gegen ein unbeabsichtigtes Verkippen zu gewährleisten, können die Beabstandungsorgane sich zusätzlich entlang einer Axialrichtung der Abstandshalterung erstrecken, also senkrecht zu ihrer radialen Erstreckungsrichtung bzw. parallel zu der Längsrichtung der zu schützenden Leitung. In diesem Fall sind beispielsweise anstelle der genannten Speichen also Flügel bzw. Rippen vorgesehen. Der Schutzmantel wird entweder unmittelbar an die freien Enden der Speichen oder Flügel angelegt, oder die Abstandshalterungen sind zusätzlich mit einem äußeren Anlegering bzw. einer äußeren Anlegemantelfläche versehen.

Zum Befestigen des Schutzmantels an den Abstandshalterungen werden vorzugsweise Befestigungseinrichtungen verwendet. Bei den Befestigungseinrichtungen kann es sich um Haken handeln, die bereits entlang einer Längsseite des Schutzmantels vormontiert sind und, sobald der Schutzmantel an die Abstandshalterungen angelegt ist, an einem angrenzenden Längsabschnitt des Schutzmantels unmittelbar oder über hieran angebrachte Ösen eingehakt werden.

Alternativ hierzu können die Befestigungseinrichtungen Zurrbänder, beispielsweise Kabelbinderbänder, Hakenbänder oder Schlauchschellen aufweisen. Diese Zurrbänder werden auf Höhe einer Abstandshalterung um den Schutzmantel angelegt, wobei ihr Umfang so stark verringert wird, daß die Position des Schutzmantels gesichert ist.

Bei einer weiteren bevorzugten Ausführungsform besitzt der Schutzmantel mehrere Segmente, die vorzugsweise nacheinander überlappend oder unmittelbar aneinander angrenzend entlang der Leitung angeordnet sind. Benachbarte derartige Schutzmantel-Segmente können durch eine Verbindungseinrichtung miteinander verbunden werden. Beispielsweise kann ein gegenseitiges Verriegeln, Verrasten oder Verhaken vorgesehen sein.

Weitere Ausführungsformen sind in den Unteransprüchen angegeben.

Die Erfindung wird nachfolgend beispielhaft unter Bezugnahme auf die Zeichnungen erläutert; in diesen zeigen:
- Fig. 1a und 1b: eine Seitenansicht bzw. eine Perspektivansicht einer Abstandshalterung,
- Fig. 2: eine Draufsicht eines Schutzmantels,
- Fig. 3a und 3b: eine Seitenansicht bzw. eine Draufsicht einer Befestigungseinreichtung,
- Fig. 4: eine montierte Leitungsschutzvorrichtung,
- Fig. 5: eine Seitenansicht einer Abstandshalterung,
- Fig. 6: eine Draufsicht eines Schutzmantels mit drei daran vormontierten Abstandshalterungen,
- Fig. 7: eine montierte Leitungsschutzvorrichtung,
- Fig. 8a, 8b und 8c: eine Seitenansicht, eine Perspektivansicht bzw. eine Draufsicht einer Abstandshalterung,
- Fig. 9a, 9b und 9c: eine Draufsicht, eine Seitenansicht bzw. eine Unteransicht einer Befestigungseinrichtung,
- Fig. 10: eine Perspektivansicht eines Schutzmantels,
- Fig. 11: eine montierte Leitungsschutzvorrichtung,
- Fig. 12a und 12b: eine Perspektivansicht bzw. eine Draufsicht einer Abstandshalterung,
- Fig. 13: eine Perspektivansicht einer Abstandshalterung, und
- Fig. 14a und 14b: eine Draufsicht bzw. eine Querschnittsansicht entlang der Ebene XIVb-XIVb eines Schutzmantels,
- Fig. 15: eine Draufsicht auf drei miteinander verbundene Schutzmantel-Segmente,
- Fig. 16: eine perspektivische Detailansicht eines als Verbindungseinrichtung vorgesehenen Doppeldruckknopfes,
- Fig. 17: eine Perspektivansicht einer geradlinigen Leitung mit drei daran angebrachten Schutzmantel-Segmenten,
- Fig. 18: eine Perspektivansicht einer gekrümmten Leitung mit drei daran angebrachten Schutzmantel-Segmenten,
- Fig. 19: eine Perspektivansicht eines Schutzmantels mit zwei Verschlußorganen und zwei Gegenverschlußorganen als Verbindungseinrichtung,
- Fig. 20: eine Mittenquerschnittsansicht der Verbindungseinrichtung gemäß Fig. 19,
- Fig. 21: eine Draufsicht auf eine gekrümmte Leitung mit zwei daran angebrachten gekrümmten Schutzmantel-Segmenten, und
- Fig. 22: eine Draufsicht auf eine gekrümmte Leitung mit einem daran angebrachten Schutzmantel mit einer Umfangseinkerbung.

Gleiche oder gleichartige Teile sind in den Figuren mit denselben Bezugszeichen gekennzeichnet.

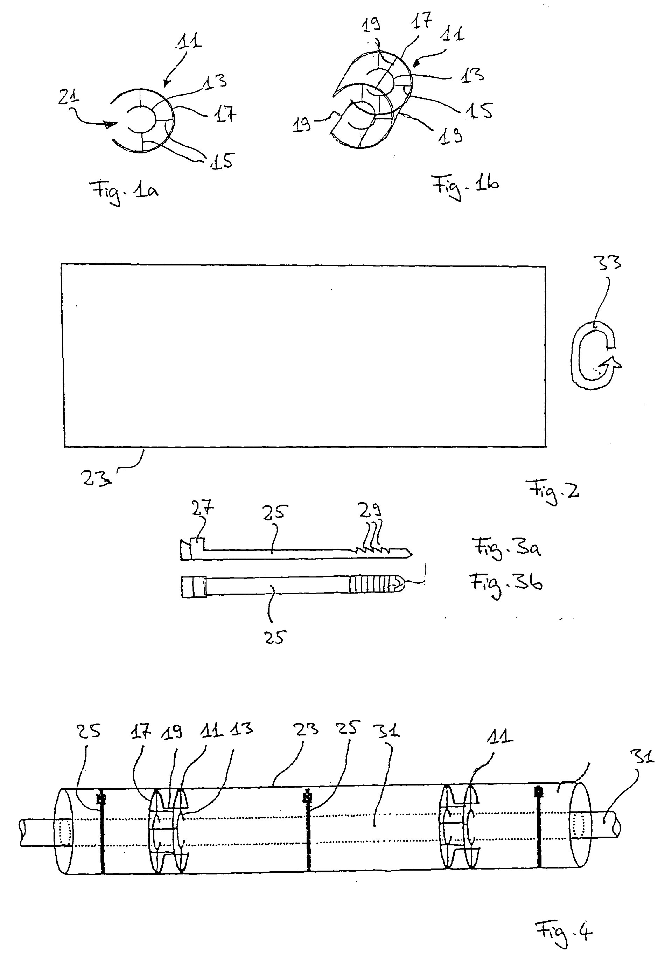

Fig. 1a und 1b zeigen eine Abstandshalterung 11. Diese besitzt zwei C-förmige Klammerringe 13, die jeweils über drei radiale Speichen 15 mit einem äußeren Anlegering 17 verbunden sind. Die beiden Anlegeringe 17 sind über Axialstreben 19 miteinander verbunden, so daß die Abstandshalterung 11 ein Käfiggestell bildet.

Der Klammerring 13 und der Anlegering 17 besitzen jeweils eine Kreisform und sind entlang eines gemeinsamen Aufsetzschlitzes 21 in einer radialen Richtung geöffnet.

Fig. 2 zeigt einen Schutzmantel 23, der sich in seinem unmontierten Zustand als eine ebene, rechteckige Fläche erstreckt.

In den Fig. 3a und 3b ist als Befestigungseinrichtung ein Kabelbinderband 25 dargestellt, das an einem Ende einen Rastkäfig 27 und an dem anderen Ende Rastvertiefungen 29 besitzt.

Die Abstandshalterung 11, der Schutzmantel 23 und das Kabelbinderband 25 bilden gemeinsam eine Leitungsschutzvorrichtung. Zu deren Montage an einer zu schützenden Leitung 31 (Fig. 4) werden zunächst wenigstens zwei Abstandshalterungen 11 unter kurzzeitigem elastischem Aufspreizen der Klammerringe 13 seitlich auf die Leitung 31 gesteckt, so daß der jeweilige Klammerring 13 die Leitung 31 umgreift. Anschließend wird der Schutzmantel 23 um die montierten Abstandshalterungen 11 gerollt bzw. gewickelt, wie in Fig. 2 durch den Pfeil 33 angedeutet. Schließlich wird der umfänglich an die Abstandshalterungen 11 angelegte Schutzmantel 23 mittels der Kabelbinderbänder 25 fixiert, wobei den beiden Stirnseiten einer Abstandshalterung 11 benachbart jeweils ein Kabelbinderband 25 vorgesehen ist.

Fig. 4 zeigt die derartig montierte Leitungsschutzvorrichtung. Aufgrund der lediglich mittelbaren Umwicklung der Leitung 31 mit dem Schutzmantel 23 ist dieser von der Leitung 31 radial beabstandet, so daß zwischen der Leitung 31 und dem Schutzmantel 23 ein Hohlraum gebildet ist. Ein mechanisches Einwirken auf die Leitung 31, insbesondere eine Beschädigung durch Marderverbiß, ist lediglich nach Durchdringen des Schutzmantels 23 und des besagten Hohlraums möglich.

Zu dem in Fig. 4 gezeigten Montagezustand ist noch anzumerken, daß die Leitung 31 selbstverständlich entlang ihrer gesamten Länge mit dem Schutzmantel 23 versehen wird. Hierfür wird die Länge des Schutzmantels 23 durch entsprechendes Ablängen an die Länge der Leitung 31 angepaßt. Außerdem können die Abstandshalterungen 11, um einen sicheren und stabilen Abschluß des Schutzmantels 23 an den beiden Enden der Leitung 31 zu gewährleisten, den Leitungsenden unmittelbar benachbart angeordnet sein.

Schließlich ist zu der Leitungsschutzvorrichtung noch zu bemerken, daß die Breite des Schutzmantels 23 dem Umfang des Anlegerings 17 der Abstandshalterungen 11 angepaßt wird, so daß die beiden Längskanten des gemäß Fig. 4 montierten Schutzmantels 23 genau bündig entlang der Längsrichtung der Leitung 31 aneinander angrenzen. Alternativ hierzu kann die Breite des Schutzmantels 23 so bemessen sein, daß sich bezüglich des Umfangs der Anordnung gemäß Fig. 4 ein Überlapp ergibt, oder daß der Schutzmantel 23 die Abstandshalterungen 11 bzw. die Leitung 31 mit mehreren Umwicklungen umgibt.

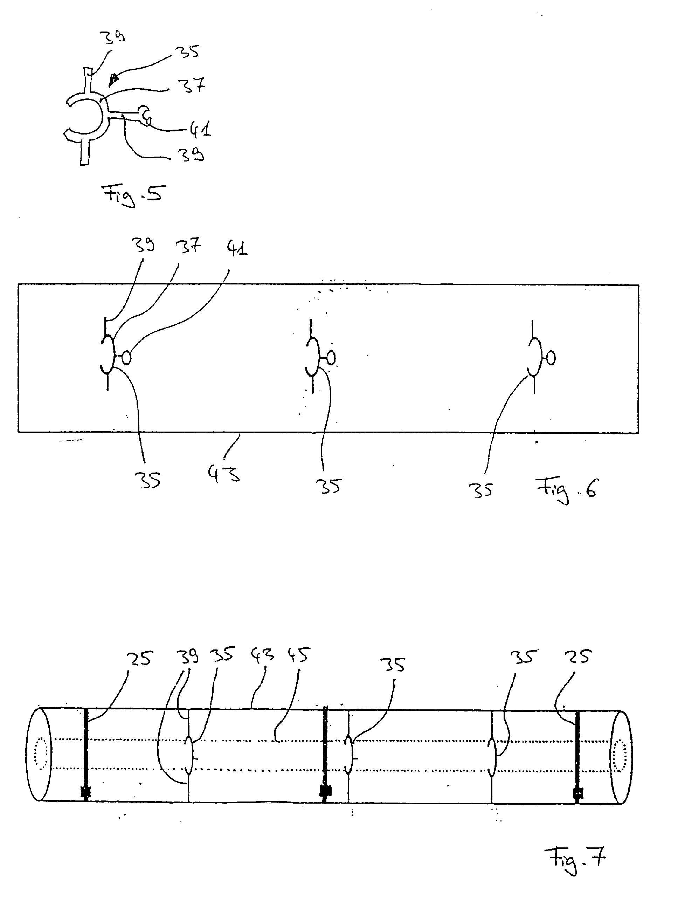

Fig. 5 zeigt eine weitere Abstandshalterung 35 mit einem C-förmigen Klammerring 37 und drei daran angeformten, sich in radialer Richtung erstreckenden Speichen 39. An das freie Ende der mittleren der Speichen 39 schließt sich ein Halteorgan 41 an, beispielsweise ein Widerhaken.

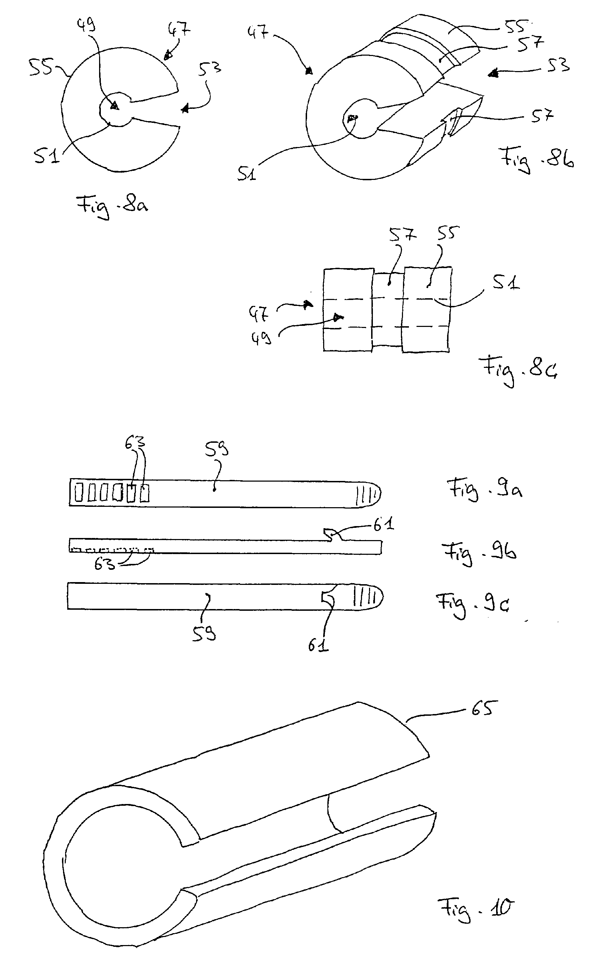

Die Abstandshalterung 35 kann bei Auslieferung einer Leitungsschutzvorrichung über das Halteorgan 41 bereits an einem Schutzmantel 43 vormontiert sein, wie in Fig. 6 für drei Abstandshalterungen 35 gezeigt. Sobald zur Endmontage der Vorrichtung die Abstandshalterungen 35 an einer Leitung 45 (Fig. 7) angebracht worden sind, muß der Schutzmantel 43 mit seinen beiden Längskanten nur noch um die Abstandshalterungen 35 und somit um die Leitung 45 umgeschlagen werden. Anschließend kann der Schutzmantel 43 mit Befestigungseinrichtungen, insbesondere mit Kabelbinderbändern 25 gemäß Fig. 3a und 3b, fixiert werden (Fig. 7).

Eine werkseitige Vormontage von Abstandshalterungen 35 an einem Schutzmantel 43, wie in Fig. 6 gezeigt, kann beispielsweise auch durch Verschweißen von Halteorganen 41 oder Abstandshalterungen 35 aus Metall an einem Schutzmantel 43 aus Metall erfolgen.

Fig. 8a bis 8c zeigen ein weiteres Beispiel einer Abstandshalterung 47, die die Form eines Hohlzylinders besitzt. Die Abstandshalterung 47 besitzt eine zentrale Aufnahmeöffnung 49, die in radialer Richtung von einer Klammerhülse 51 umschlossen und lediglich an einem Abschnitt ihres Umfangs zu einem radialen Aufsetzschlitz 53 geöffnet ist. Der Aufsetzschlitz 53 erstreckt sich bis zu der äußeren Mantelfläche 55 der Abstandshalterung 47. Die Mantelfläche 55 weist entlang ihres Umfangs eine Umfangsvertiefung 57 auf.

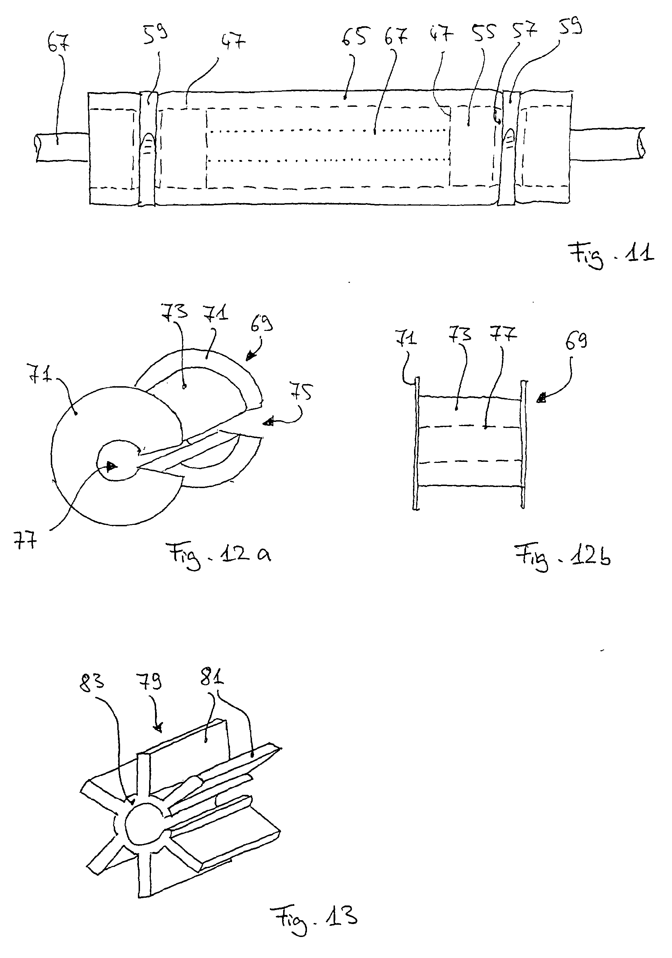

Fig. 9a bis 9c zeigen ein Hakenband 59, das an einem Ende einen Haken 61 und an dem anderen Ende mehrere Einhängevertiefungen 63 aufweist.

Fig. 10 zeigt einen Schutzmantel 65, der zu der Form einer längsgeschlitzten Hülse vorgeformt ist.

Der Schutzmantel 65 kann mittels der Abstandshalterungen 47 der Hakenbänder 59 an einer Leitung 67 (Fig. 11) montiert werden. Hierfür werden zunächst wenigstens zwei Abstandshalterungen 47 auf die Leitung 67 aufgeclipst, so daß die Leitung 67 in der Aufnahmeöffnung 49 liegt. Bei diesem Aufclipsen wird die Abstandshalterung 47 kurzzeitig bezüglich ihres Umfangs gespreizt. Sobald die Leitung 67 entlang des Aufsetzschlitzes 53 in die Aufnahmeöffnung 49 eingeführt ist, kann die Abstandshalterung 47 in eine entspannte Lage zurückschnappen oder unter einer gewissen Vorspannung die Leitung 67 umgreifen.

Sodann wird der Schutzmantel 65 über die vormontierten Abstandshalterungen 47 gestülpt, wobei ein nachfolgendes Umwickeln der Abstandshalterungen 47 durch die Form des Schutzmantels 65 erleichtert wird.

Außerdem kann der Schutzmantel 65 mit einer seiner beiden Längskanten in den Aufsetzschlitz 53 der Abstandshalterungen 47 eingeführt werden. Dadurch wird die Lage des Schutzmantels 65 stabilisiert, so daß das nachfolgende Umwickeln der Abstandshalterung 47 ebenfalls erleichtert wird.

Der derartig an die Abstandshalterungen 47 angelegte Schutzmantel 65 wird schließlich mittels der Hakenbänder 59 fixiert. Hierfür werden die Hakenbänder 59 jeweils an einer Abstandshalterung 47 angesetzt, und zwar entlang einer Umfangsvertiefung 57. Die betreffende Abstandshalterung 47 wird sodann entlang ihres Umfangs gestaucht bzw. komprimiert, und der Haken 61 wird an einer der Einhängevertiefungen 63 des Hakenbands 59 verhakt.

Der aufgrund der Stauchung von der Abstandshalterung 47 auf das Hakenband 59 ausgeübte Gegendruck bewirkt, daß der Haken 61 nicht wieder unbeabsichtigt außer Eingriff mit der betreffende Einhängevertiefung 63 gerät. Alternativ oder zusätzlich kann dieser Gegendruck auch dadurch erzielt werden, daß der Schutzmantel 65 aus einem elastisch komprimierbaren Material besteht und bei dem Ansetzen bzw. Verzurren der Hakenbänder 59 ebenfalls elastisch komprimiert wird.

Die derartig montierte Leitungsschutzvorrichtung ist in Fig. 11 gezeigt. Die beiden Abstandshalterungen 47 sind genau an den Stirnseiten des Schutzmantels 65 angeordnet, so daß der von dem Schutzmantel 65 umschlossene Hohlraum auch seitlich zumindest teilweise abgeschlossen ist.

Jeder Abstandshalterung 47 ist genau ein Hakenband 59 zugeordnet, und zwar entlang der Umfangsvertiefung 57. Dadurch sind die Hakenbänder 59 gegen ein unbeabsichtigtes seitliches Verrutschen gesichert.

Fig. 12a und 12b zeigen eine weitere Abstandshalterung 69 mit zwei Ringscheiben 71 an den beiden Stirnseiten, die über einen Hohlzylinder 73 verbunden sind. Die Abstandshalterung 69 besitzt einen Aufsetzschlitz 75, der in radialer Richtung bis in eine zentrale Aufnahmeöffnung 77 hinein reicht. Die beiden Ringscheiben 71 können, ähnlich der Umfangsvertiefung 57 gemäß Fig. 11, eine an der Abstandshalterung 69 verzurrte Befestigungseinrichtung gegen ein unbeabsichtigtes seitliches Verrutschen sichern.

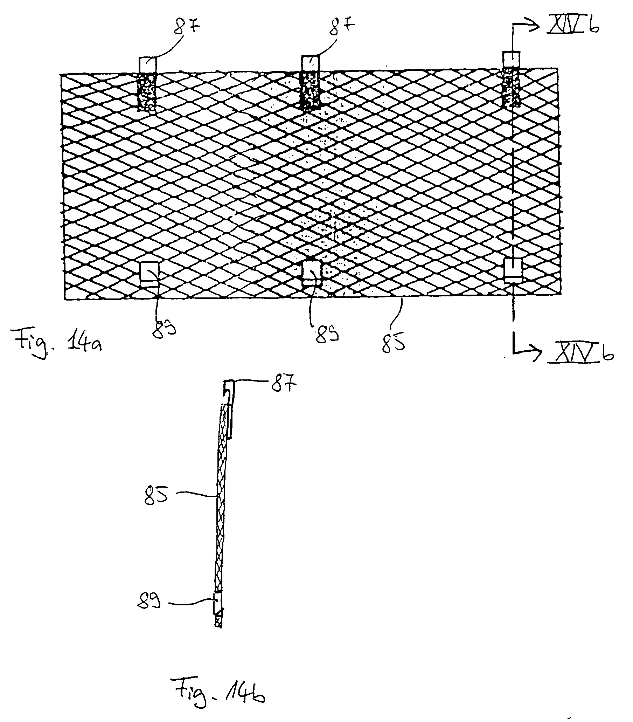

Fig. 13 zeigt ein weiteres Beispiel einer Abstandshalterung 79. Diese besitzt als Beabstandungsorgane sechs Flügel 81, die sich in radialer Richtung erstrecken. Im Unterschied zu den Speichen 39 gemäß Fig. 5 erstrecken sich die Flügel 81 an einer längsgeschlitzten Klammerhülse 83 zusätzlich entlang einer Axialrichtung.

Fig. 14a und 14b zeigen ein weiteres Beispiel eines Schutzmantels 85, der der aus einem Drahtgeflecht gebildet ist. Entlang einer Längskante des Schutzmantels 85 sind drei Haken 87 angebracht. An der gegenüberliegenden Längskante sind drei entsprechende Ösen 89 eingearbeitet. Zur Befestigung des Schutzmantels 85 an Abstandshalterungen, die einen vorbestimmten Außenumfang besitzen, werden die Haken 87 in die zugeordneten Ösen 89 eingehängt.

Alternativ zu der Ausbildung des Schutzmantels 85 als Drahtgeflecht kann dieser auch ein Lochblech oder ein Gitter aufweisen.

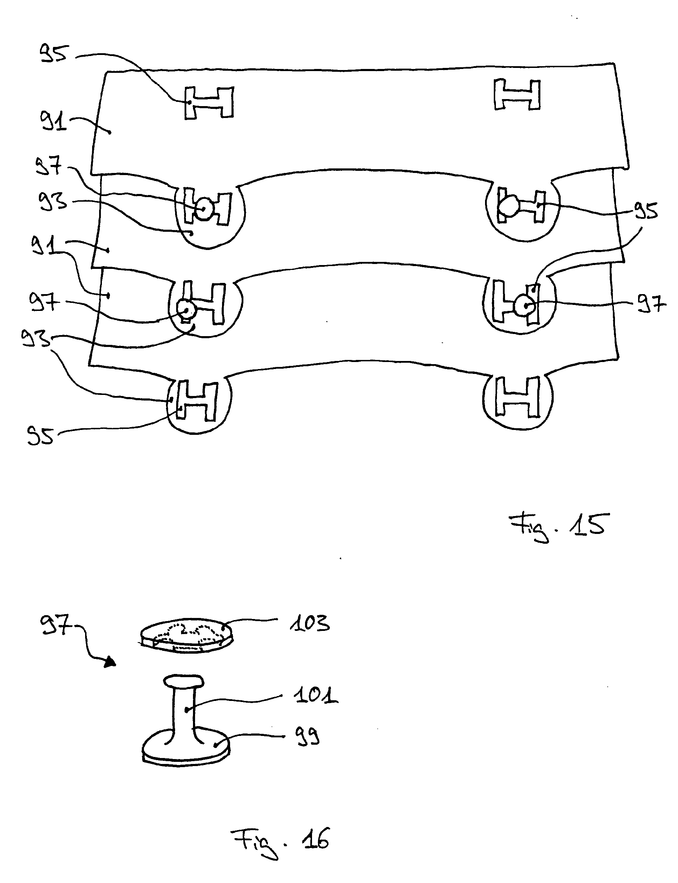

Fig. 15 zeigt drei im wesentlichen trapezförmige Schutzmantel-Segmente 91, die jeweils zwei Verbindungsfortsätze 93 aufweisen. Jedes Schutzmantel-Segment 91 besitzt an den Verbindungsfortsätzen 93 sowie diesen gegenüberliegend jeweils eine Verbindungsöffnung 95.

Jeweils benachbarte Schutzmantel-Segmente 91 sind derartig relativ zueinander angeordnet, daß zwei Paare von Verbindungsöffnungen 95 zumindest teilweise übereinander liegen. Die Schutzmantel-Segmente 91 sind aneinander fixiert, indem Verriegelungsorgane 97 in die fluchtenden Verbindungsöffnungen 95 eingeführt sind. Die Schutzmantel-Segmente 91 können bereits werkseitig auf die in Fig. 15 gezeigte Weise vormontiert sein, oder die Verbindung mehrerer Schutzmantel-Segmente 91 aneinander erfolgt - in Abhängigkeit von der Länge der zu schützenden Leitung - erst bei der Endmontage vor Ort.

Fig. 16 zeigt als Beispiel eines Verriegelungsorgans 97 einen Doppeldruckknopf. Dieser besitzt als ein Einführteil eine Verriegelungsgrundplatte 99 mit einem axialen Einführstift 101, und als ein Aufsetzteil eine Verriegelungsgegenplatte 103. Zur Befestigung zweier Schutzmantel-Segmente 91 aneinander wird der Einführstift 101 von einer Seite durch die fluchtenden Verbindungsöffnungen 95 geführt, und die Verriegelungsgegenplatte 103 wird von der anderen Seite an dem freien Ende des Einführstifts 101 verrastet. Wichtig ist, daß die Verriegelungsgrundplatte 99 und die Verriegelungsgegenplatte 103 ausreichend groß sind, um ein unbeabsichtigtes axiales Entweichen des Doppeldruckknopfes 97 aus den Verbindungsöffnungen 95 zu verhindern.

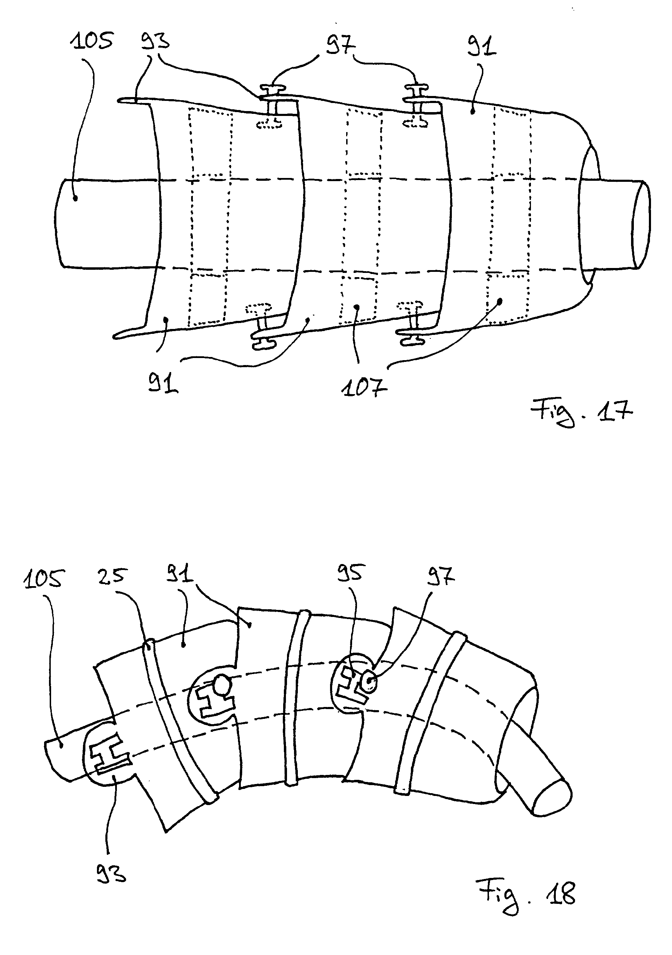

Fig. 17 zeigt die miteinander verbundenen Schutzmantel-Segmente 91 gemäß Fig. 15, nachdem diese um eine zu schützende Leitung gewickelt worden sind. Zu diesem Zweck ist die Leitung 105 vorher mit Abstandshalterungen 107 versehen worden, die einen trapezförmigen Querschnitt besitzen und im übrigen beispielsweise den Abstandshalterungen 47 gemäß Fig. 11 entsprechen können.

Wie aus Fig. 17 ersichtlich, besitzen die Schutzmantel-Segmente 91 nach dem Umwickeln der Leitung 105 im wesentlichen die Form einer Kegelstumpf-Mantelfläche, und sie überlappen schuppenartig. Zur endgültigen Montage werden die Schutzmantel-Segmente 91 an den Abstandshalterungen 107 vorzugsweise über Befestigungseinrichtungen fixiert, wobei beispielsweise das Kabelbinderband 25 gemäß Fig. 7 oder das Hakenband 59 gemäß Fig. 11 verwendet werden kann. Die erläuterte Unterteilung des Schutzmantels in Segmente 91 hat den Vorteil, daß der Schutzmantel auf einfache Weise gekrümmten Leitungen angepaßt werden kann: Fig. 18 zeigt eine gekrümmte Leitung 105, die von drei Schutzmantel-Segmenten 91 umhüllt ist.

Um eine besonders flexible Anpassung an unterschiedliche Krümmungsradien der Leitung 105 einerseits und an unterschiedliche Durchmesser von Abstandshalterungen 107 (in Fig. 18 nicht gezeigt) zu ermöglichen, besitzen die Verbindungsöffnungen 95 der Segmente 91 gemäß Figuren 15 und 17 einen zweidimensionalen Verlauf, nämlich eine H-Form. Alternativ hierzu sind auch andere zweidimensionale Verläufe, beispielsweise eine S-, O- oder X-Form möglich, oder ein eindimensionaler Verlauf, insbesondere ein Längs- oder Querschlitz. Ferner sind zweidimensionale oder eindimensionale Anordnungen mehrerer Lochungen möglich.

Anstelle der gezeigten Doppeldruckknöpfe 97 können als Verschlußorgan und Gegenverschlußorgan auch einfache Druckknöpfe verwendet werden, deren Grundplatte 99 mit einem Segment 91 fest verbunden ist.

Zu den Ausführungsformen gemäß Fig. 15 bis 18 ist noch anzumerken, daß die gegenseitige Verbindung der Segmente 91 nicht auf Grundlage zwei- oder eindimensionaler Verbindungsöffnungen 95 erfolgen muß. Falls die Verbindungsöffnungen kein gegenseitiges Verschieben der Segmente 91 ermöglichen, kann eine ausreichende Möglichkeit der Anpassung des Schutzmantels an gekrümmte Leitungsverläufe dadurch geschaffen werden, daß die miteinander zu verbindenden Segmente 91 mit Gelenken oder Scharnieren versehen sind. Insbesondere können Verbindungsfortsätze der gezeigten Art 93 scharnierartig elastisch abknickbar ausgebildet sein.

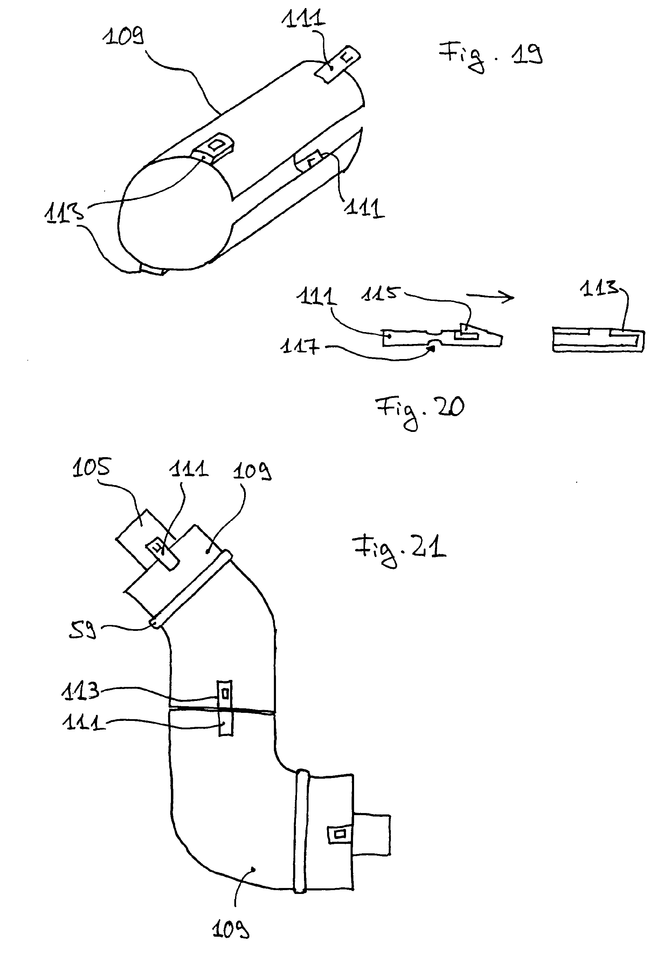

Fig. 19 zeigt ein Schutzmantel-Segment 109. Zur Verbindung dieses Segments 109 mit benachbarten, unmittelbar angrenzenden Segmenten sind an den Stirnseiten des Segments 109 zwei Verschlußorgane 111 bzw. zwei Gegenverschlußorgane 113 vorgesehen.

Wie aus der Mittenquerschnittsansicht gemäß Fig. 20 ersichtlich, besitzt das Verschlußorgan 111 eine Rastnase 115, die in das als Rastkäfig ausgebildete Verschlußorgan 113 eingeführt wird.

Das Verschlußorgan 111 ist außerdem aufgrund einer mittigen Verjüngung 117 nach oben und unten flexibel verschwenkbar ausgebildet. Das Verschlußorgan 111 kann somit als Schanier wirken, um unterschiedliche Durchmesser der zu schützenden Leitung oder der verwendeten Abstandshalterung überwinden zu können und/oder um eine Anpassung an einen gekrümmten Verlauf der zu schützenden Leitung zu ermöglichen.

Aus Fig. 21 ist die Möglichkeit ersichtlich, Schutzmantel-Segmente 109 vorzusehen, die hinsichtlich ihrer Axialrichtung vorgekrümmt sind, um die Anpassung an gekrümmte Leitungen 105 zu ermöglichen oder zu vereinfachen. Auch in diesem Fall sind - in Fig. 21 nicht gezeigte - Abstandshalterungen sowie vorzugsweise Befestigungseinrichtungen 59 vorgesehen.

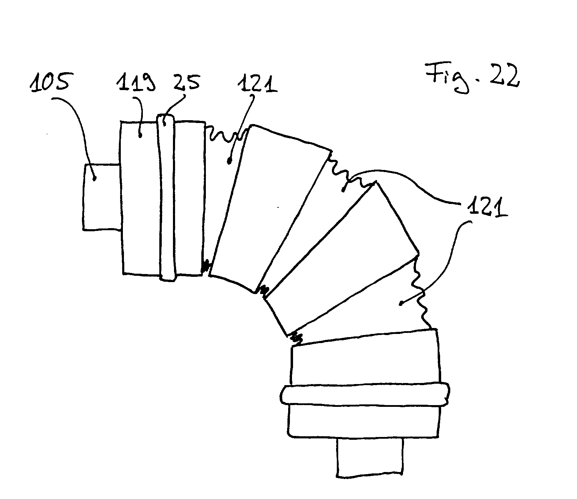

Fig. 22 zeigt einen Schutzmantel 119, der mehrere Umfangseinkerbungen 121 besitzt, die eine Anpassung des Schutzmantels 119 an unterschiedlich gekrümmte Leitungen 115 ermöglichen.

Schließlich ist anzumerken, daß die erläuterten Abstandshalterungen 11, 35, 47, 69, 79, 107, die Befestigungseinrichtungen 25, 59, 87, 89 und die Schutzmäntel 23, 43, 65, 85, 91, 109, 119 aus Metall oder aus einem hitze- und kältebeständigen, beißfesten und vorzugsweise elastischen Kunststoff bestehen können.

### Bezugszeichenliste

- 11: Abstandshalterung
- 13: Klammerring
- 15: Speiche
- 17: Anlegering
- 19: Axialstrebe
- 21: Aufsetzschlitz
- 23: Schutzmantel
- 25: Kabelbinderband
- 27: Rastkäfig
- 29: Rastvertiefung
- 31: Leitung
- 33: Pfeil
- 35: Abstandshalterung
- 37: Klammerring
- 39: Speiche
- 41: Halteorgan
- 43: Schutzmantel
- 45: Leitung
- 47: Abstandshalterung
- 49: Aufnahmeöffnung
- 51: Klammerhülse
- 53: Aufsetzschlitz
- 55: Mantelfläche
- 57: Umfangsvertiefung
- 59: Hakenband
- 61: Haken
- 63: Einhängevertiefung
- 65: Schutzmantel
- 67: Leitung
- 69: Abstandshalterung
- 71: Ringscheibe
- 73: Hohlzylinder
- 75: Aufsetzschlitz
- 77: Aufnahmeöffnung
- 79: Abstandshalterung
- 81: Flügel
- 83: Klammerhülse
- 85: Schutzmantel
- 87: Haken
- 89: Öse
- 91: Schutzmantel-Segment
- 93: Verbindungsfortsatz
- 95: Verbindungsöffnung
- 97: Verriegelungsorgan
- 99: Verriegelungsgrundplatte
- 101: Einführstift
- 103: Verriegelungsgegenplatte
- 105: Leitung
- 107: Abstandshalterung
- 109: Schutzmantel-Segment
- 111: Verschlußorgan
- 113: Gegenverschlußorgan
- 115: Rastnase
- 117: Verjüngung
- 119: Schutzmantel
- 121: Umfangseinkerbung

## Patentansprüche

1. Leitungsschutzvorrichtung zum Schutz von Leitungen vor Tierverbiß, insbesondere zum Schutz von Leitungen eines Kraftfahrzeugs vor Marderbiß,
zumindest mit zwei Abstandshalterungen (11, 35, 47, 69, 79, 107) und einem flächigen Schutzmantel (23, 43, 65, 85, 91, 109, 119), wobei die Abstandshalterungen (11, 35, 47, 69, 79, 107) an einer zu schützenden Leitung (31, 45, 67, 105) befestigbar sind, und wobei der Schutzmantel (23, 43, 65, 85, 91, 109, 119) dergestalt gewölbt an die Abstandshalterungen anlegbar ist, daß die Leitung (31, 45, 67, 105) von dem Schutzmantel umfänglich umgeben ist und zumindest entlang eines Abschnitts der Leitung zwischen der Leitung und dem Schutzmantel ein Hohlraum gebildet ist.

2. Leitungsschutzvorrichtung nach Anspruch 1,
**dadurch gekennzeichnet,**
daß zumindest eine der Abstandshalterungen (11, 35, 47, 69, 79, 107) ein Klammerorgan (13, 37, 51, 83) zum umgreifenden Aufsetzen auf die Leitung (31, 45, 67, 105) aufweist, wobei das Klammerorgan (13, 37, 51, 83) insbesondere einen runden Innendurchmesser aufweist, der vorzugsweise dem Außendurchmesser der Leitung (31, 45, 67, 105) entspricht oder zur Erzielung einer Klammerspannung geringer ist als dieser, und/oder wobei das Klammerorgan insbesondere einen radial offenen Klammerring (13, 37) oder eine längsgeschlitzte Klammerhülse (51, 83) aufweist.

3. Leitungsschutzvorrichtung nach einem der vorhergehenden Ansprüche,
**dadurch gekennzeichnet,**
daß die Abstandshalterung (11, 35, 47, 69, 79, 107) an der Leitung (31, 45, 67, 105) lösbar befestigbar ist, und/oder
daß das Klammerorgan (13, 37, 51, 83) und/oder die Abstandshalterung (11, 35, 47, 69, 79, 107) bezüglich seines bzw. ihres Durchmessers elastisch spreizbar und/oder stauchbar ist, und/oder
daß zumindest eine der Abstandshalterungen (11, 35, 47, 69, 79, 107) wenigstens ein Beabstandungsorgan (15, 17, 19, 39, 71, 73, 81) aufweist, das sich insbesondere von einem Klammerorgan (13, 37, 51, 83) im wesentlichen radial erstreckt, wobei das Beabstandungsorgan (73, 81) sich vorzugsweise zusätzlich entlang einer Axialrichtung eines Klammerorgans (51, 83) der Abstandshalterung (69, 79) erstreckt.

4. Leitungsschutzvorrichtung nach einem der vorhergehenden Ansprüche,
**dadurch gekennzeichnet,**
daß zumindest eine der Abstandshalterungen (11) Axialstreben (19) aufweist, und/oder
daß zumindest eine der Abstandshalterungen (11, 35, 79) wenigstens zwei, vorzugsweise drei Speichen (15, 39) oder Flügel (81) als Beabstandungsorgane aufweist, und/oder
daß zumindest eine der Abstandshalterungen (11) wenigstens drei Speichen (15) als Beabstandungsorgane aufweist, die zum einen mit einem radial offenen Klammerring (13) und zum anderen mit einem radial offenen Anlegering (17) verbunden sind, und/oder
daß zumindest eine der Abstandshalterungen (69) wenigstens eine Ringscheibe (71) als Beabstandungsorgan aufweist mit einer zentralen Aufnahmeöffnung (77) zur Aufnahme der Leitung, einem radialen Aufsetzschlitz (75) zum Einführen der Leitung in die Aufnahmeöffnung, sowie einem durch den Aufsetzschlitz unterbrochenen Anlegering zum Anlegen des Schutzmantels, und/oder
daß zumindest eine der Abstandshalterungen zwei Anlegeringe (17) oder Ringscheiben (71) aufweist, die vorzugsweise jeweils an einer Stirnseite der Abstandshalterung (11, 69) angeordnet sind, und/oder
daß zumindest eine der Abstandshalterungen (69) einen Hohlzylinder (73) aufweist mit einer zentralen Aufnahmeöffnung (49, 77) zur Aufnahme der Leitung, einem radialen Aufsetzschlitz (53, 75) zum Einführen der Leitung in die Aufnahmeöffnung, sowie einer durch den Aufsetzschlitz unterbrochenen Anlegemantelfläche (55) zum Anlegen des Schutzmantels, und/oder
daß ein Beabstandungsorgan (39) einer Abstandshalterung (35) an dem Schutzmantel (43) vormontiert ist, und/oder
daß mehrere Abstandshalterungen mit unterschiedlichem Innendurchmesser eines jeweiligen Klammerorgans vorgesehen sind.

5. Leitungsschutzvorrichtung nach einem der vorhergehenden Ansprüche,
**dadurch gekennzeichnet,**
daß wenigstens zwei Befestigungseinrichtungen (25, 59, 87, 89) vorgesehen sind, durch die der an die Abstandshalterungen angelegte Schutzmantel (23, 43, 65, 85, 91, 109, 119) bezüglich der Leitung fixierbar ist,
wobei insbesondere eine der Anzahl der Abstandshalterungen (11, 35, 47, 107) entsprechende Anzahl von Befestigungseinrichtungen (25, 35, 59) vorgesehen ist, und/oder
wobei die Befestigungseinrichtungen (59, 25) zur Anbringung an dem Schutzmantel (65, 23) insbesondere jeweils auf Höhe einer Abstandshalterung (47, 107) oder einer Abstandshalterung (11) jeweils zweiseitig benachbart vorgesehen sind, und/oder
wobei zumindest eine der Abstandshalterungen (47) insbesondere eine Umfangsvertiefung (57) zur Stabilisierung der Lage einer Befestigungseinrichtung (59) aufweist.

6. Leitungsschutzvorrichtung nach Anspruch 5,
**dadurch gekennzeichnet,**
daß die Befestigungseinrichtungen (87, 89) an dem Schutzmantel (85) vormontiert sind, und/oder
daß zumindest eine der Befestigungseinrichtungen einen Haken (87) zum Einhaken an dem Schutzmantel (85) oder an einer an dem Schutzmantel (85) vorgesehenen Öse (89) aufweist, und/oder
daß zumindest eine der Befestigungseinrichtungen ein Zurrband aufweist, das umfänglich um den an die Abstandshalterungen angelegten Schutzmantel anlegbar ist und dessen Umfang vorzugsweise einstellbar ist,
wobei es sich bei dem Zurrband insbesondere um ein Kabelbinderband (25), ein Hakenband (59) oder um eine Schlauchschelle handelt.

7. Leitungsschutzvorrichtung nach einem der vorhergehenden Ansprüche,
**dadurch gekennzeichnet,**
daß der Schutzmantel (23, 43, 85, 109, 119) eine rechteckige Grundform und/oder mehrere Segmente (91, 109) aufweist,
wobei die Breite des Schutzmantels (23, 43, 85, 109, 119) oder eines Schutzmantel-Segments (91, 109) vorzugsweise größer ist als der Umfang der größten Abstandshalterung oder diesem Umfang entspricht, und/oder
wobei die Schutzmantel-Segmente (91) vorzugsweise eine Trapezform aufweisen, und/oder
wobei die Schutzmantel-Segmente (91, 109) vorzugsweise in einer überlappenden oder einander angrenzenden Anordnung entlang der Leitung (105) vorgesehen sind, und/oder
wobei die Schutzmantel-Segmente (91, 109) vorzugsweise eine Verbindungseinrichtung zur gegenseitigen Verbindung zweier benachbarter Schutzmantel-Segmente aufweisen.

8. Leitungsschutzvorrichtung nach Anspruch 7,
**dadurch gekennzeichnet,**
daß die Verbindungseinrichtung zusätzlich als Scharnier ausgebildet ist, und/oder
daß als Verbindungseinrichtung an den Stirnenden von benachbarten Schutzmantel-Segmenten (109) wenigstens ein Verschlußorgan (111) und ein Gegenverschlußorgan vorgesehen sind, die vorzugsweise zum gegenseitigen Verrasten oder zum gegenseitigen Verhaken ausgebildet sind, und/oder
daß als Verbindungseinrichtung wenigstens jeweils eine Verbindungsöffnung (95) an benachbarten Schutzmantel-Segmenten (91) und wenigstens ein gemeinsames Verriegelungsorgan (97) vorgesehen sind,
wobei die Verbindungsöffnung (95) vorzugsweise zur Gewährung eines Anpassungsspiels zweidimensional, insbesondere H-, S-, O- oder X-förmig, oder eindimensional, insbesondere als Längsschlitz oder Querschlitz, ausgebildet ist, und/oder
wobei das Verriegelungsorgan (97) vorzugsweise zur Verriegelung von fluchtenden Verbindungsöffnungen (95) der benachbarten Schutzmantel-Segmente (91) ausgebildet ist und insbesondere einen Druckknopf aufweist.

9. Leitungsschutzvorrichtung nach einem der vorhergehenden Ansprüche,
**dadurch gekennzeichnet,**
daß der Schutzmantel (65) oder ein Schutzmantel-Segment (109) zu der Form einer längsgeschlitzten Hülse vorgeformt ist, und/oder daß der Schutzmantel (119) oder ein Schutzmantel-Segment wenigstens eine Umfangseinkerbung (121) zur flexiblen Anpassung des Schutzmantels an eine gekrümmte Leitung (105) aufweist, und/oder daß der Schutzmantel oder ein Schutzmantel-Segment (109) zur Anpassung an eine gekrümmte Leitung (105) zu einem gekrümmten Axialverlauf vorgeformt ist, und/oder
daß der Schutzmantel ein Folienstück (23, 43, 65), ein Netzstück (85) oder ein Gitterstück aufweist, und/oder
daß der Schutzmantel (23, 43, 65, 85, 91, 109, 119) aus Metall oder aus einem hitze- und kältebeständigen, beißfesten und insbesondere elastischen Kunststoff besteht.

10. Verwendung einer Leitungsschutzvorrichtung nach einem der vorhergehenden Ansprüche zum Schutz von Leitungen oder Schutzmanschetten eines Kraftfahrzeugs vor Tierverbiß.
